# EUROPEAN PATENT APPLICATION

(11) **EP 2 484 953 A1**
(43) Date of publication of application: **08.08.2012**
(21) Application number: 10734884.9
(22) Date of filing: 29.01.2010
(51) Int. Cl.: F21S 2/00, F21Y 101/02

(54) **LIGHT SOURCE MODULE AND ELECTRONIC APPARATUS WITH SAME**

(30) Priority: 30.09.2009 JP 2009229119
(71) Applicant: Sharp Kabushiki Kaisha, Osaka-shi, Osaka 545-8522 (JP)
(72) Inventor: KOKUBO, Fumio, Osaka-shi, Osaka 545-8522 (JP); WAKAMURA, Sayuri, Osaka-shi, Osaka 545-8522 (JP); NAGURA, Hideaki, Osaka-shi, Osaka 545-8522 (JP); ISHIZAKA, Takuya, Osaka-shi, Osaka 545-8522 (JP)
(74) Representative: Müller - Hoffmann & Partner
(86) International application number: PCT/JP2010/000550
(87) International publication number: WO 2011/039896

(57) **Abstract**

According to a light source module of the present invention, a plurality of light guides (21) constituting a light guide plate are provided so as to extend, parallel with one another, in a long-side direction of the plurality of light guides (21) and so as to be separated from one another by gaps. Concavities and convexes are formed in an emission surface of each of the plurality of light guides (21) along the long-side direction of the plurality of light guides (21). Respective ridge lines of the convexes out of the concavities and convexes are substantially parallel with the long-side direction. With the arrangement, it is possible to provide (i) a light source module in which the rate of occurrence of luminance unevenness can be reduced and (ii) an electronic device including the light source module.

## Description

### Technical Field

The present invention relates to (i) a light source module for use in a backlight which includes a side-edge type (also referred to as a side-light type) light guide plate, which causes surface emission of light from a light source, so as to reduce a thickness of, e.g., a liquid crystal display device, and (ii) an electronic device including the light source module.

### Background Art

In recent years, a backlight including a side-edge type (also referred to as a side-light type) light guide plate, which causes surface emission of light from a light source, has been widely used so as to reduce a thickness of a liquid crystal display device.

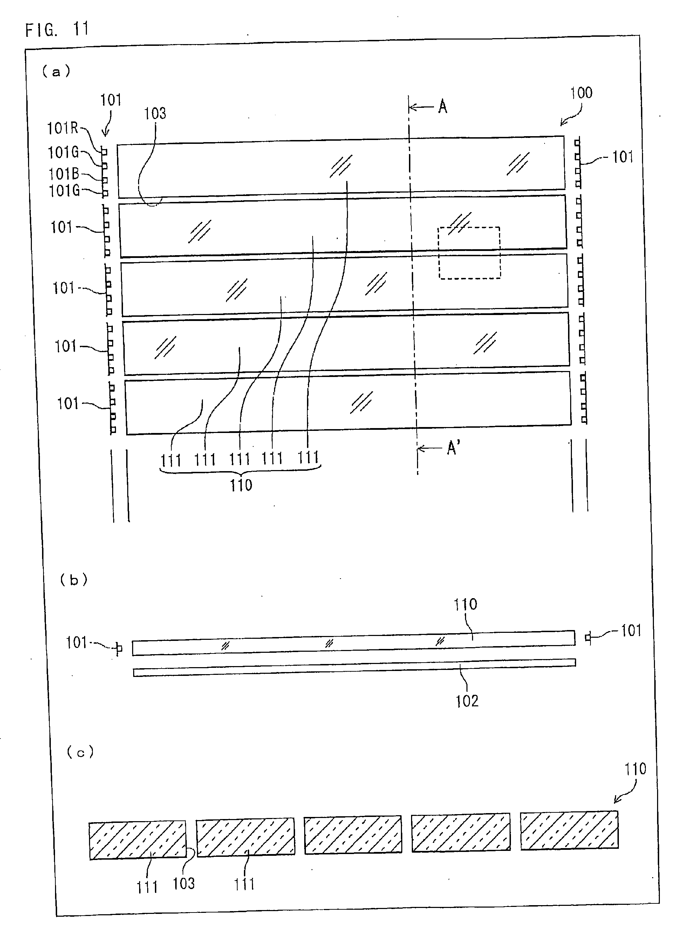

An example of such a side-edge type light guide plate is an illumination device disclosed in Patent Literature 1. Fig. 11 is a view illustrating the illumination device of Patent Literature 1. As illustrated in (a), (b), and (c) of Fig. 11, the illumination device 100 disclosed in Patent Literature 1 includes (i) a light guide plate 110 including a plurality of light guides 111 which are juxtaposed and (ii) a plurality of light sources 101 which are provided for each of the plurality of light guides 111 in the light guide plate 110 and which emit light toward the each of the plurality of light guides 111. Each of the plurality of light sources 101 includes: one red LED (light-emitting diode) 101R; two green LEDs 101G; and one blue LED 101B. The illumination device 100 further includes a reflecting sheet 102 under the light guide plate 110. A gap 103 is secured between any adjacent two of the plurality of light guides 111. The gap 103 is an air layer and has a width of not less than 0.1 µm. With the arrangement, it is possible to carry out a pseudo impulse-type display.

Patent Literature 2, for example, also discloses a structure of a light emitter of a kind similar to the Patent Literature 1.

### Citation list

Patent Literature 1
   Japanese Patent Application Publication, Tokukai, No. 2008-34372 A (Publication Date: February 14, 2008)
Patent Literature 2
   Japanese Patent Application Publication, Tokukai, No. 2009-43706 A (Publication Date: February 28, 2009)

### Summary of Invention

### Technical Problem

In the light source module having the above conventional arrangement, the gap 103 between each adjacent two of the plurality of light guides 111 needs to have a width of the order of 1 mm to 2 mm in view of thermal expansion and production tolerance of the plurality of light guides 111.

There is, however, a problem that luminance unevenness occurs due to the gap 103 in the case where the gap 103 has the above width.

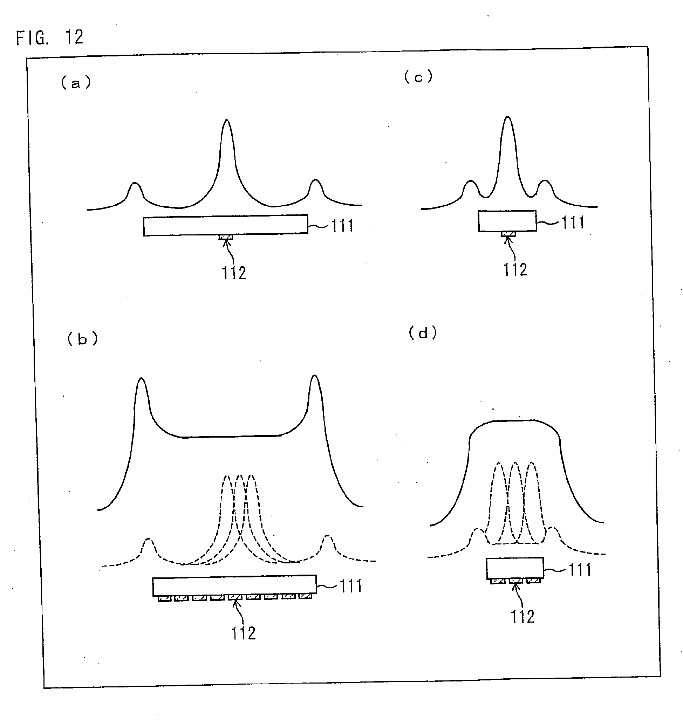

A cause of the luminance unevenness is described below with reference to Fig. 12, which is a view illustrating a mechanism by which light is emitted from a light guide 111.

A luminance distribution observed in a case where a light scatterer 112 is formed on the light guide 111 has (i) a high peak directly above the light scatterer 112 and (ii) low peaks corresponding to respective ones of both side surfaces of the light guide (see a solid line in (a) or (c) of Fig. 12).

In a case where the light guide 111 is wide in a short-side direction (see (a) of Fig. 12), it is necessary to provide a large number of light scatterers 112 in the short-side direction of the light guide 111 (see (b) of Fig. 12). As such, (i) high peaks are caused directly above respective ones of the large number of light scatterers 112 and (ii) a plurality of low peaks are caused so as to correspond to the respective ones of both side surfaces of the light guide 111 (see a dotted line in (b) of Fig. 12). As a result, a luminance distribution observed in a case where the plurality of light scatterers 112 are provided is substantially flat directly above the light guide 111 but has high peaks corresponding to the respective ones of both side surfaces of the light guide (see a solid line in (b) of Fig. 12). Therefore, in this case, it is difficult to uniformize luminance.

In a case where the light guide 111 is narrow in the short-side direction (see (c) of Fig. 12), a luminance distribution observed in the case where a single light scatterer 112 is provided has (i) a high peak directly above the light scatterer 112 and (ii) low peaks corresponding to respective ones of both side surfaces of the light guide, as in the case where the light guide 111 is wide in the short-side direction. However, since only a small number of light scatterers 112 are necessary in the short-side direction (see (d) of Fig. 12), a luminance distribution observed in a case where the small number of light scatterers 112 are provided is low at portions corresponding to the respective ones of both side surfaces of the light guide (see a solid line in (d) of Fig. 12). As is indicated by the above description, luminances corresponding to the respective ones of both side surfaces of the light guide 111 vary according to a width of the light guide 111 in the short-side direction. Specifically, the luminances corresponding to the respective ones of both side surfaces of the light guide 111 become higher as the width of the light guide 111 in the short-side direction becomes larger.

Furthermore, in the case where the light guide 111 is narrow in the short-side direction, the light guide 111 becomes likely to be bent because the light guide 111 has have a low rigidity, and ease of assembly is also decreased because a large number of light guides are necessary to cover a predetermined area.

As described above, there is a problem that in the light guide having the conventional arrangement, it is difficult to uniformize a luminance distribution in the above gap, and luminance unevenness thus occurs.

The present invention has been accomplished in view of the above conventional problem. It is an object of the present invention to provide (i) a light source module in which a rate of occurrence of luminance unevenness can be reduced and (ii) an electronic device including the light source module.

### Solution to Problem

In order to solve the above problem, a light source module of the present invention includes: a plurality of light guides provided so as to be juxtaposed in a long-side direction of the plurality of light guides, and so that a gap is secured between any adjacent ones of the plurality of light guides; a plurality of light sources which cause light to enter a corresponding one of the plurality of light guides via at least one end surface located in the long-side direction; and a plurality of optical path changing sections, provided on a surface of each of the plurality of light guides which surface is opposite to a light emission surface of the each of the plurality of light guides, for causing light guided inside the each of the plurality of light guides to be emitted from the light emission surface, the each of the plurality of light guides having a surface of concavities and convexes which surface serves as the light emission surface, and respective ridge lines of the convexes extending substantially parallel (not necessarily completely parallel; i.e., parallel enough to reduce the rate of occurrence of luminance unevenness) to the long-side direction.

According to the present invention, the plurality of light guides constituting a light guide plate of a side-edge type (also referred to as a side-light type) light source module are provided so as to extend, parallel with one another, in the long-side direction and so as to be separated from one another by gaps. As such, in a case where each light guide is narrow in a short-side direction, an amount of light emitted from the gaps is small. On the other hand, in a case where each light guide is wide in the short-side direction, the amount of light emitted from the gaps is large, thereby causing luminance unevenness over the entire light guide plate.

According to the present invention, however, concavities and convexes are formed on the emission surface (upper surface) of the light guide along the long-side direction of the light guide. Further, an optical path changing section for extracting light guided through the inside of the light guide is formed on a surface (under surface) of the light guide which surface is opposite to the emission surface of the light guide. With the arrangement, light scattered by the optical path changing section is emitted from the emission surface due to the concavities and convexes before reaching side surfaces of the light guide. As a result, the amount of light emitted from the side surfaces of the light guide is significantly decreased even in the case where the light guide is wide in the short-side direction. Luminance unevenness can thus be prevented. As such, it is possible to provide a light source module in which the rate of occurrence of luminance unevenness can be reduced even in the case where the light guide is wide in the short-side direction.

In order to solve the above problem, an electronic device of the present invention includes the light source module.

According to the present invention, it is possible to provide an electronic device including a light source module in which the rate of occurrence of luminance unevenness can be reduced.

### Advantageous Effects of Invention

As described above, the light source module of the present invention is arranged such that (i) concavities and convexes are formed on the light emission surface of a light guide and (ii) respective ridge lines of the convexes are substantially parallel with the long-side direction. The electronic device of the present invention includes the light source module as described above.

As such, the present invention makes it possible to provide (i) a light source module in which the rate of occurrence of luminance unevenness can be reduced and (ii) an electronic device including the light source module.

Additional objects, features, and strengths of the present invention will be made clear by the description below. Further, the advantages of the present invention will be evident from the following explanation in reference to the drawings.

### Brief Description of Drawings

Fig. 1

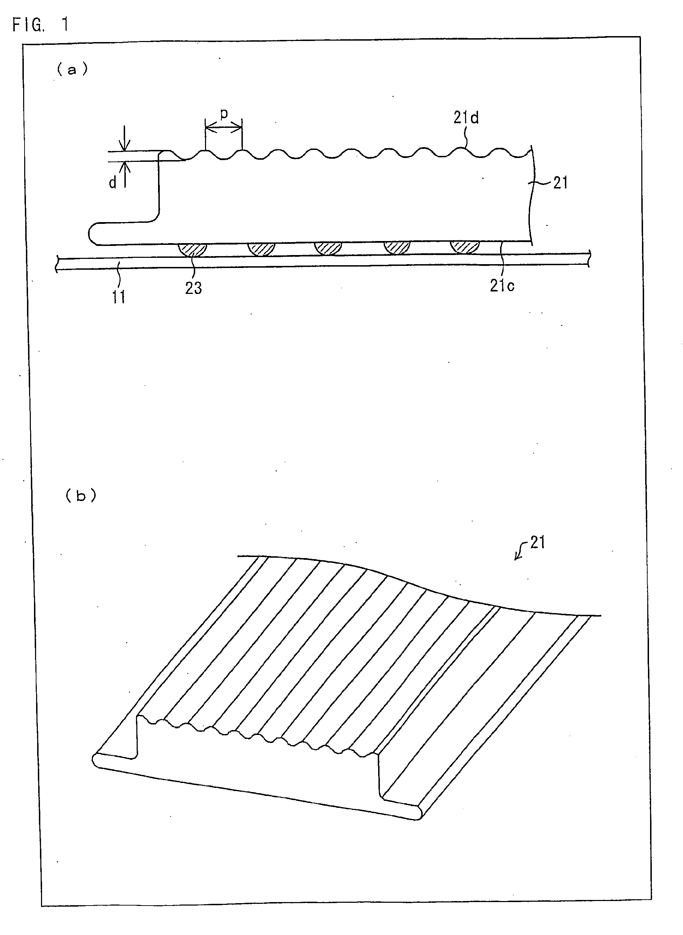

   Fig. 1 illustrates a light guide included in a light source module of the present invention, where (a) is a cross-sectional view taken in a direction perpendicular to a long-side direction of the light guide, and (b) is a perspective view illustrating the light guide.
Fig. 2

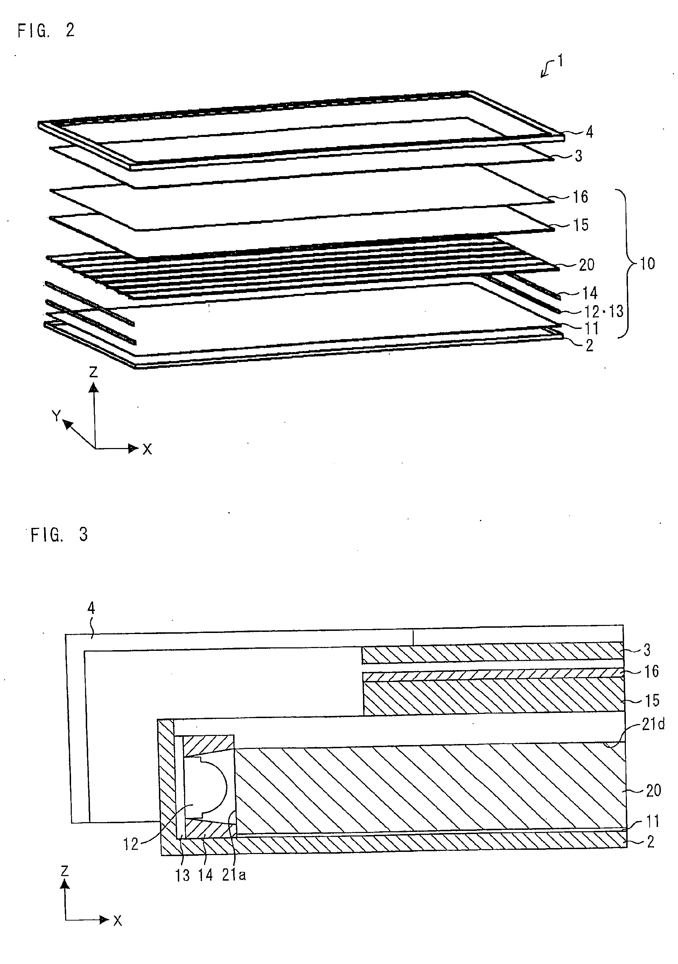

   Fig. 2 is an exploded perspective view illustrating an arrangement of a liquid crystal display device including the light source module.
Fig. 3
   Fig. 3 is a cross-sectional view partially illustrating the arrangement of the liquid crystal display device including the light source module.
Fig. 4

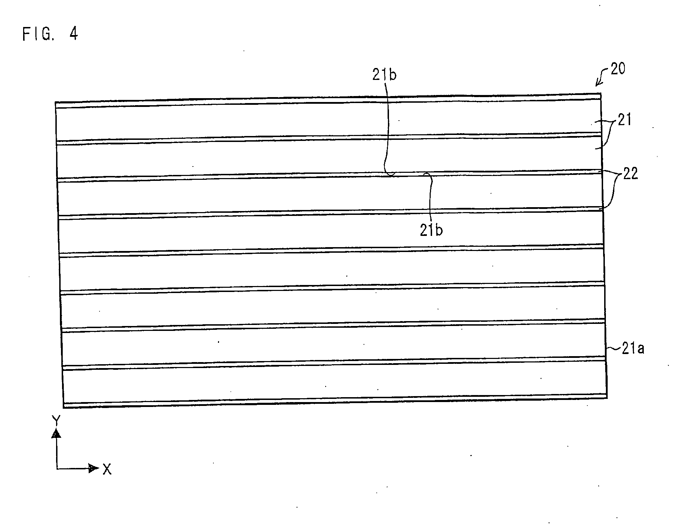

   Fig. 4 is a plan view illustrating an arrangement of a light guide plate included in the light source module.
Fig. 5

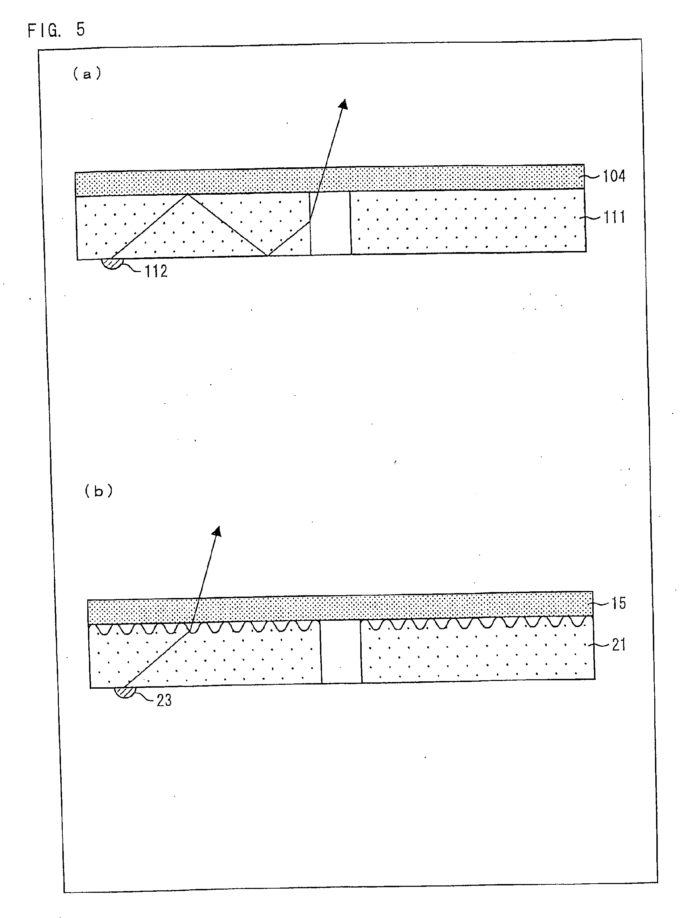

   Fig. 5 illustrates a relation between (i) presence or absence of concavities and convexes in a light guide and (ii) a path of light scattered by a scatterer inside the light guide, where (a) is a cross-sectional view illustrating a case in which no concavities or convexes are formed in an emission surface of the light guide, and (b) is a cross-sectional view illustrating a case in which concavities and convexes are formed in the emission surface of the light guide.
Fig. 6

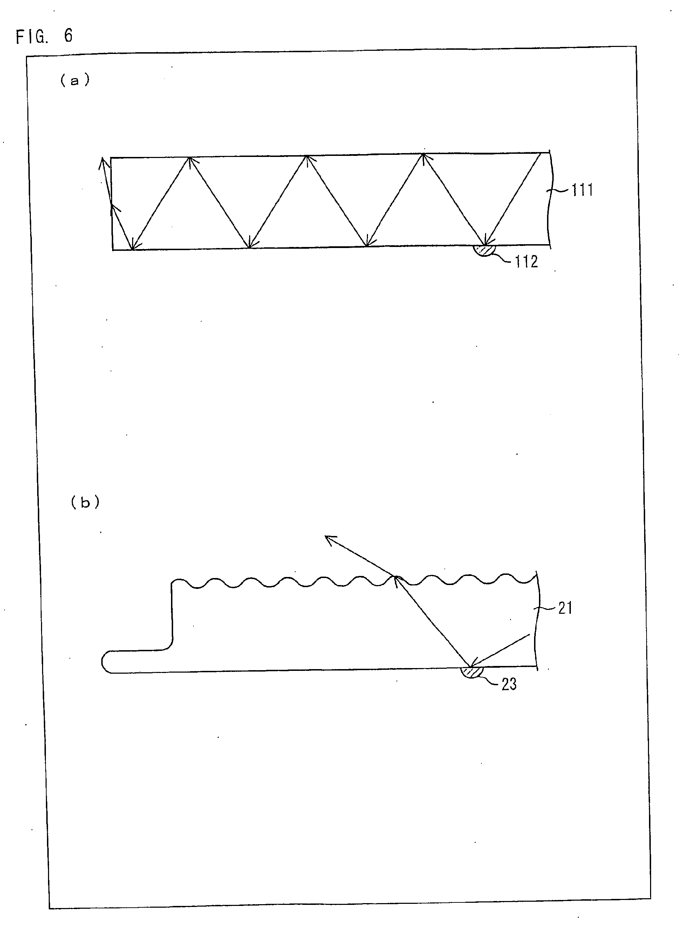

   Fig. 6 illustrates the relation between (i) the presence or absence of concavities and convexes in a light guide and (ii) a path of light scattered by a scatterer inside the light guide, where (a) is a cross-sectional view illustrating the case in which no concavities or convexes are formed in the emission surface of the light guide, and (b) is a cross-sectional view illustrating the case in which concavities and convexes are formed in the emission surface of the light guide.
Fig. 7

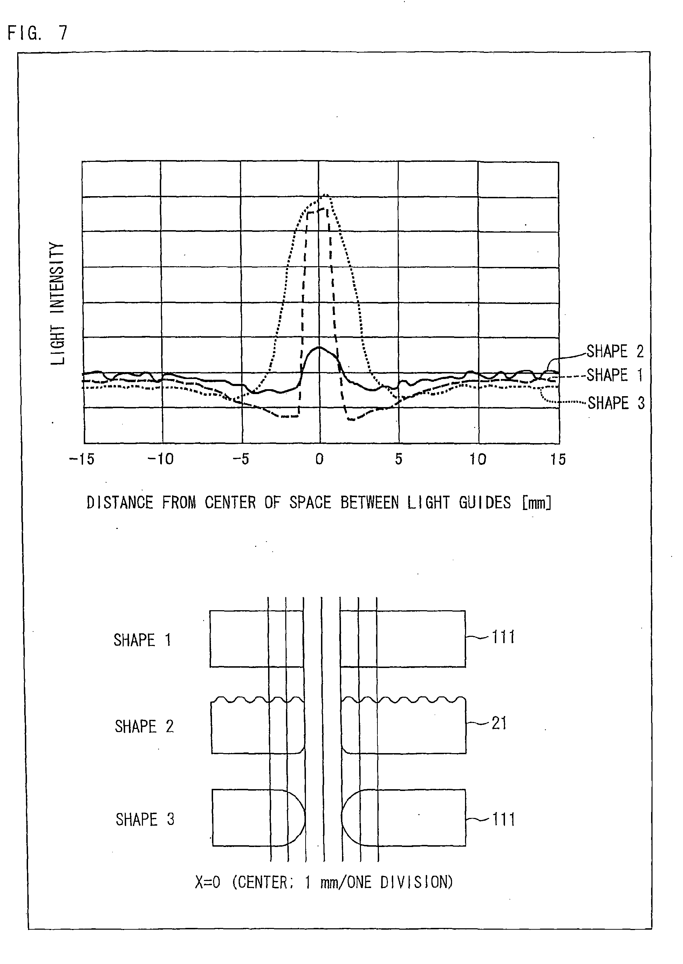

   Fig. 7 illustrates a relation between (i) the presence or absence of concavities and convexes in a light guide and (ii) a luminance distribution corresponding to side surfaces of the light guide.
Fig. 8

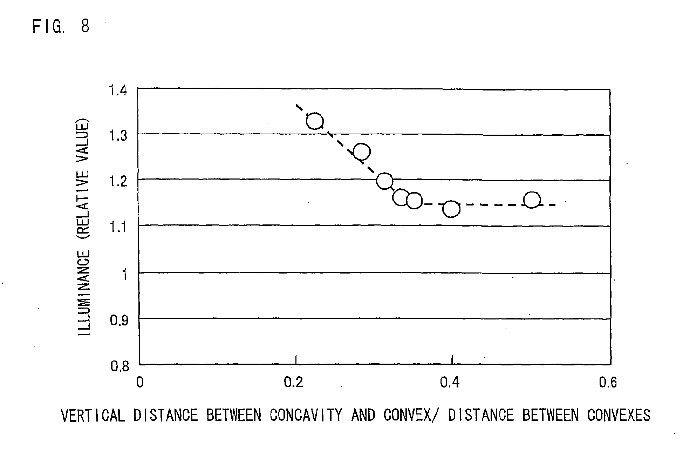

   Fig. 8 is a graph illustrating a relation between (i) a vertical distance between a concavity and a convex/ a distance between adjacent convexes for a light guide and (ii) an illuminance.
Fig. 9

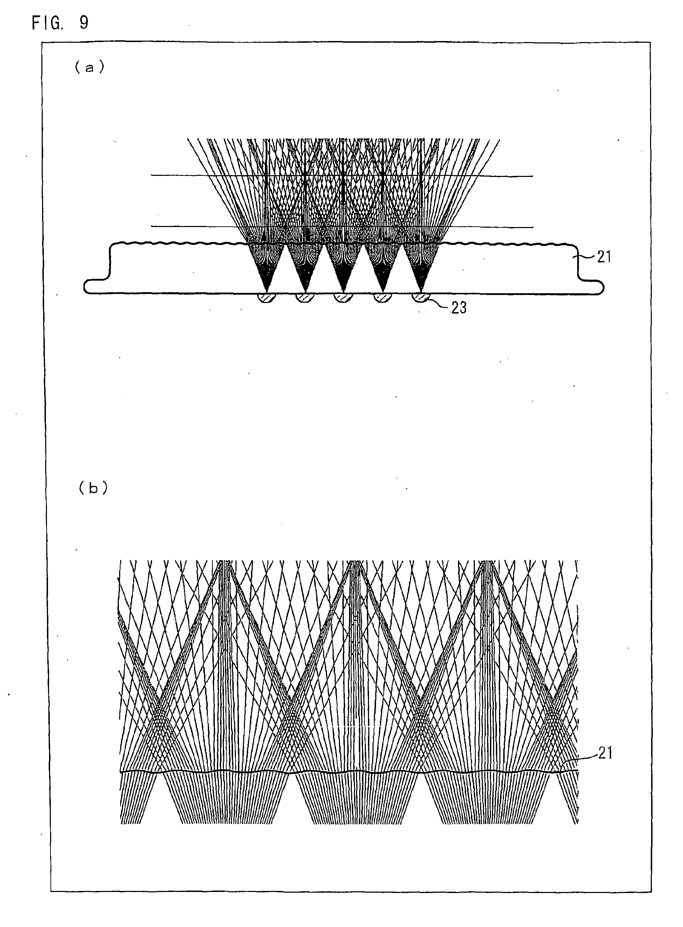

   Fig. 9 illustrates how light is emitted from a light guide including concavities and convexes having a small vertical distance between a concavity and a convex, where (a) is a view illustrating the entire light guide, and (b) is an enlarged view of (a).
Fig. 10

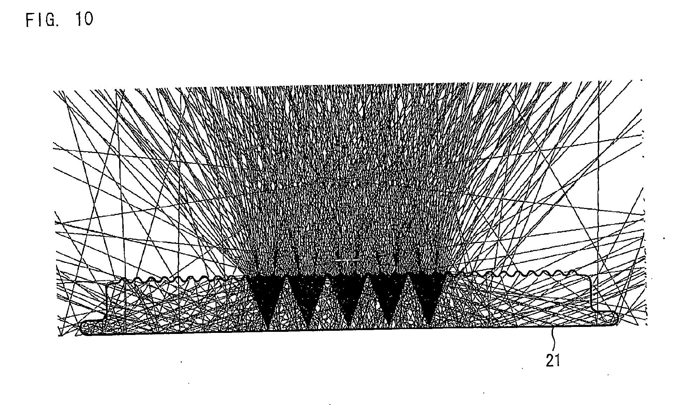

   Fig. 10 illustrates how light is emitted from a light guide including concavities and convexes having a large vertical distance between a concavity and a convex.
Fig. 11
   Fig. 11 illustrates a light source module of Patent Literature 1, where (a) is a plan view illustrating an arrangement of the light source module, (b) is an elevational view illustrating the arrangement of the light source module, and (c) is a cross-sectional view taken along line A-A' of (a).
Fig. 12
   Fig. 12 illustrates luminance distributions caused by light scatterers, where each of (a) and (b) is a view illustrating a luminance distribution observed in a case where a light guide is wide in the short-side direction, and each of (c) and (d) is a view illustrating a luminance distribution observed in a case where the light guide is narrow in the short-side direction.

### Description of Embodiments

### [Embodiment 1]

An embodiment of the present invention is described below with reference to Figs. 1 through 10. Fig. 2 is an exploded perspective view illustrating a liquid crystal display device (electronic device) including a light source module of the present embodiment.

According to a liquid crystal display device 1 serving as an example of an electronic device including a light source module 10 of the present embodiment, a chassis 2, the light source module 10, a liquid crystal panel 3, and a bezel 4 are provided in this order from bottom to top (see Fig. 2). The light source module 10 includes: a reflecting sheet 11 serving as a reflecting plate; a combination of an LED (light-emitting diode) 12 serving as a light source and an LED substrate 13; a reflector 14; a light guide plate 20; a diffusing plate 15; and an optical sheet group 16. Note that the optical sheet group 16 is not necessarily provided in the present invention.

Fig. 3 is a cross-sectional view partially illustrating an arrangement of the liquid crystal display device 1 including the light source module 10. As illustrated in Fig. 3, the LED 12, the LED substrate 13, and the reflector 14 are provided on an end of the light guide plate 20. This causes light emitted from the LED 12 to (i) enter the light guide plate 20 via an end surface 21 a of the light guide plate 20 and then (ii) be emitted from an emission surface 21 d of the light guide plate 20 toward the liquid crystal panel 3, through the diffusing plate 15 and the optical sheet group 16. It follows that the light source module 10 of the present embodiment employs a side-edge type (also referred to as a side-light type). Note that although light is emitted from the light guide plate 20 via surfaces other than the emission surface 21d, most of the light from the light guide plate 20 is emitted via the emission surface 21d. This is because the reflecting sheet 11 is provided on the surfaces other than the emission surface 21d and therefore light which enters the surfaces other than the emission surface 21d is reflected by the reflecting sheet 11 so as to enter the light guide plate 20 again.

Note that the liquid crystal display device 1 has a problem that a moving image blurs, as compared to a CRT (cathode ray tube) display device. Specifically, a CRT display device causes a viewer to less perceive after image. This is because the CRT display device separately secures a non-light emitting period, during which a pixel emits no light, between (i) a light emitting period of a pixel in a frame and (ii) a light emitting period of the pixel in a subsequent frame. On the other hand, the liquid crystal display device 1 causes a viewer to perceive after image. This is because the liquid crystal display device 1 employs a "hold-type" display method, in which no non-light emitting period is separately secured. The viewer recognizes this after image as a blurred moving image.

In view of the circumstances, backlight blinking technique has been proposed for a backlight-type liquid crystal display device 1. According to the backlight blinking technique, a black display is inserted between image displays by causing a divided light source module 10, serving as a backlight, to sequentially turn off in synchronization with timing at which a video signal is supplied to the liquid crystal panel 3. This causes a pseudo impulse-type display As a result, it is possible for a viewer to less perceive after image, and it is also possible to reduce power consumption.

Fig. 4 is a plan view illustrating an arrangement of the light guide plate 20 of the light source module 10. As illustrated in Fig. 4, the light source module 10 of the present embodiment employs the following arrangement so as to carry out the backlight blinking technique. Specifically, the light source module 10 is arranged such that (i) the light guide plate 20 is configured to be constituted by a plurality of light guides 21, and (ii) the plurality of light guides 21 are provided so as to be juxtaposed in a long-side direction and so as to secure a gap 22 between any adjacent light guides 21. According to the present embodiment, each light of the LEDs 12 thus enters a corresponding end surface 21 a of the plurality of light guides 21 which is one of two end surfaces located in the long-side direction (see Fig. 3). Note that each light of the LEDs 12 does not necessarily enter the end surface 21a. Alternatively, each light of the LEDs 12 can enter the other of the two end surfaces which faces the end surface 21a in the long-side direction or can enter both the end surface 21a and the other of the two end surfaces. In other words, the present invention simply requires light to enter the light guide 21 via at least the one end surface 21 a.

In a case where the light guide plate 20 is configured so as to be constituted by a plurality of light guides 21 and so that the plurality of light guides 21 are provided to be juxtaposed in the long-side direction, each of the gaps 22 needs to have a width of about 1 mm to 2 mm in view of thermal expansion and production tolerance of the plurality of light guides 21.

Such a width of about 1 mm to 2 mm, however, causes a problem that luminance unevenness occurs in the gaps 22 in the case where the gap 22 has the above width.

In view of the problem, the present embodiment takes a measure to prevent luminance unevenness from occurring in the gaps 22 of the plurality of light guides 21.

Fig. 1 illustrates a light guide 21 of the light source module 10. (a) of Fig. 1 is a cross-sectional view taken in a direction perpendicular to the long-side direction of the light guide 21, and (b) of Fig. 1 is a perspective view illustrating the light guide 21. As illustrated in (a) and (b) of Fig. 1, concavities and convexes are provided on an emission surface (upper surface) 21d of the light guide 21. The concavities and convexes are each provided in a streak pattern in the long-side direction of the light guide 21. Specifically, each of the light guides 21 has concavities and convexes on its light emission surface 21d, and respective ridge lines of the convexes extend substantially parallel to the long-side direction. Note that each of the light guides 21 itself has the inseparable concavities and convexes (the concavities and convexes are upper part of each of the light guides 21). As such, the concavities and convexes are not a member which is separately provided to each of the light guides 21.

According to the present embodiment, the concavities and convexes of the light guide 21 have a cross section whose shape is wavelike which cross section is taken in the direction perpendicular to the long-side direction of the light guide 21. Further, the concavities and convexes of the light guides 21 have an identical pitch. The concavities and convexes are described later.

In addition, as illustrated in (a) of Fig. 1, scatterers 23 are provided, each serving as an optical path changing section, on a under surface 21c of each of the light guides 21 (surface opposite to the emission surface 21d; back surface).

The scatterers 23 are light scatterers for causing light, guided inside a corresponding one of the light guides 21, to outgo. Specifically, the scatterers 23 cause light, guided inside the corresponding one of the light guides 21, to be scattered and to outgo via a corresponding emission surface 21 d. The scatterers 23 are arranged so that the light is uniformly emitted from the emission surface 21 d of the corresponding one of the light guides 21. The scatterers 23 are not particularly limited in shape, provided that it is possible that the light is uniformly emitted from the emission surface 21d. The scatterers 23 (dotted white patterns) of the present embodiment are studded on the under surface 21c of the corresponding one of the light guides 21. The shape of each of the scatterers 23 is not limited to this. Linear white patterns or prisms can be employed as the scatterers 23 instead of the dotted white pattern. The white pattern serving as the scatterers 23 can be formed by a process such as printing.

With reference to Figs. 5 and 6, the following description deals with a relation between (i) a path of light scattered (diffused) by a scatterer 23 and (ii) presence or absence of the concavities and convexes of a light guide 21. Each of Figs. 5 and 6 shows cross-sectional views illustrating a relation between (i) the presence and absence of the concavities and convexes of the light guide 21 and (ii) the path of light scattered inside the light guide 21 by the scatterer 23. (a) of each of Figs. 5 and 6 is a view illustrating a case of a light guide 111 having an emission surface on which neither concavities nor convexes are provided (conventional example). (b) of each of Figs. 5 and 6 is a view illustrating a case of the light guide 21 having the emission surface on which concavities and convexes are provided (the present embodiment). Note that the cross-sectional views of each light guide are taken in the direction perpendicular to the long-side direction.

As illustrated in (a) of Fig. 5, scatterers 112 are also provided, in the conventional example, on a under surface of the light guide 111 (a surface on a reflecting sheet side, i.e., a surface opposite to a liquid crystal panel) so that light is emitted from the emission surface of the light guide 111. However, part of light scattered by the scatterers 112, which part is not emitted from the emission surface of the light guide 111 and is subjected to total reflection, is guided and converged to a side surface of the light guide 111, and is then emitted from the side surface of the light guide 111 or subjected to total reflection (not shown). The light thus emitted from the side surface of the light guide 111 enters an adjacent light guide 111 or is emitted from a diffusing plate 104. An amount of the light guided to the side surface of the light guide 111 increases as the number of the scatterers 112 increases, i.e., as a width of the light guide 111 in a short-side direction increases (see (a) of Fig. 6). In other words, as described with reference to (b) of Fig. 12, luminance peaks corresponding to respective side surfaces of the light guide 111 become higher. As a result, the amount of light emitted from the side surfaces of the light guide 111 increases, and a gap between any adjacent light guides 111 becomes brighter. This causes luminance unevenness. As described above, it becomes difficult to uniformize luminance in a gap between any adjacent light guides 111, particularly in a case where the light guide 111 is wide in the short-side direction.

On the other hand, in a case where concavities and convexes are provided on the emission surface of the light guide 21 (see (b) of Fig. 5 and (b) of Fig. 6), light scattered by the scatterers 23 becomes more likely to be emitted from the emission surface instead of being subjected to total reflection on the emission surface (i.e., instead of meeting requirements of the total reflection). In other words, the light scattered by the scatterers 23 is emitted from the emission surface by the concavities and convexes before reaching the side surface of the light guide 21. As such, an amount of light emitted from the side surface of the light guide 21 significantly decreases, as compared to the case in which neither concavities nor convexes are formed. This makes it possible to prevent luminance unevenness. It is possible to uniformize luminance in a gap between any adjacent light guides 21, especially even in the case where the light guide 21 is wide in the short-side direction. As a result, it is possible to (i) reduce luminance unevenness occurring in a gap between any adjacent light guides 21 and (ii) consequently realize a planer light source having an improved luminance uniformity.

With reference to Fig. 7, the following description deals with a relation between (i) presence or absence of concavities and convexes in the light guides 21 (111) and (ii) a luminance distribution of the side surfaces of the respective light guides 21 (111). Note that data of Fig. 7 was obtained under conditions that (i) each of the light guides 21 (111) is 40 mm in width in the short-side direction and (ii) scatterers (not shown) are provided so that light is uniformly emitted except in a gap between any adjacent light guides 21 (111). In Fig. 7, a vertical axis represents a luminance (intensity), and a horizontal axis represents a distance from a center of a gap between the light guides.

According to a shape 1, (i) neither concavities nor convexes are provided in each of the light guides 111, i.e., emission surfaces of the respective light guides 111 are flat, and (ii) side surfaces of the respective light guides 111 are perpendicular to the emission surfaces. In this case, an amount of light emitted from the side surfaces of the respective light guides 111 increases, and therefore a gap between the light guides 111 becomes bright. It is thus clear that luminance unevenness occurs.

According to a shape 3, light guides 111 are prepared by partially removing the side surfaces of the respective light guides 111 having the shape 1. It is clear, however, that luminance unevenness also occurs which is almost identical to that of the shape 1.

According to a shape 2, on the other hand, concavities and convexes are provided on emission surfaces of respective light guides 21. The concavities and convexes have (i) a distance d, illustrated in (a) of Fig. 1, which falls within a range from 0.13 mm to 0. 14 mm, and (ii) a pitch p, illustrated in (a) of Fig. 1, which is 1 mm. It is clear in this case that an amount of light emitted from side surfaces of the respective light guides 21 is significantly decreased, as compared to the shapes 1 and 2, in both of which neither concavities nor convexes are formed. As such, it is possible to prevent luminance unevenness.

As is clear from the above comparison, it was confirmed that the concavities and convexes of the light guides 21 allowed (i) a significant improvement in the amount of the light emitted from side surfaces of respective light guides 21 and (ii) consequent prevention of luminance unevenness.

Fig. 8 is a graph illustrating a relation between (i) a vertical distance between a concavity and a convex/ a distance between adjacent convexes for a light guide 21 and (ii) an illuminance. The graph of Fig. 8 was plotted under a condition that the light guide 21 was 40 mm in width in the short-side direction. In Fig. 8, a vertical axis represents a first ratio (relative illuminance) of (i) an illuminance of light emitted from side surfaces of the light guide 21 to (ii) an illuminance of light emitted from an emission surface of the light guide 21, and a horizontal axis represents a second ratio (a vertical distance between a concavity and a convex/ a distance between adjacent convexes) of (i) a vertical distance between a concavity and a convex in the light guide 21 to (ii) a distance between adjacent convexes.

As illustrated in Fig. 8, the relative illuminance (the first ratio) becomes closer to 1 as the second ratio increases. Specifically, it is clear that the amount of light emitted from the side surfaces of the light guide 21 is significantly decreased in a case where the second ratio is not less than 0.2. It is further clear that the relative illuminance (the first ratio) is saturated in a case where the second ratio is not less than about 0.3. Namely, in the case where the second ratio is not less than 0.2, it is possible to control the amount of light, emitted from the side surfaces of the light guide 21, to become about 1.3 times as large as the amount of light emitted from the emission surface. Therefore, it is possible to prevent luminance unevenness from occurring in a case where the light guide 21 is provided so as to be away from a diffusing plate 15. Furthermore, in the case where the second ratio is not less than 0.3, it is possible to further reduce the amount of light emitted from the side surfaces of the light guide 21. Hence, the amount of light emitted from the side surfaces of the light guide 21 can reliably be decreased in the case where the second ratio is not less than 0.2, and preferably not less than 0.3. This can be easily realized by designing a pattern of the scatterers 23. As a result, it is possible to more reliably reduce a rate of occurrence of luminance unevenness. It is thus preferable that the second ratio is not less than 0.2, and more preferably not less than 0.3.

In contrast in a case where the second ratio is less than 0.1, the amount of light emitted from side surfaces of a light guide 21 can be decreased. However, there will cause a problem that luminance unevenness is likely to occur on an emission surface side of the light guide 21 in the case where the light guide 21 is provided so as to be away from the diffusing plate 15. Each of Figs. 9 and 10 illustrates a relation between (i) a vertical distance between a concavity and a convex of a light guide 21 and (ii) how light is emitted from the light guide (result of light ray tracing). Note that (a) of Fig. 9 is a cross-sectional view taken in the direction perpendicular to the long-side direction of the light guide 21.

As is clear from (a) and (b) of Fig. 9, in a case where the vertical distance between a concavity and a convex is small (e.g., in a case where the distance between adjacent convexes is 1 mm and the vertical distance between a concavity and a convex is not more than 0.06 mm), light which has been scattered by scatterers 23 and emitted from the emission surface of the light guide 21 is converged on two solid lines, shown in (a) of Fig. 9, which are parallel to the emission surface of the light guide 21. In other words, the amount of light obtained on the solid lines varies between (i) a portion on which the light is converged and (ii) a portion on which the light is not converged. It follows that luminance unevenness occurs on the emission surface side of the light guide 21 in a case where the diffusing plate 15 is away from the light guide 21 so as to be located on one of the two solid lines.

In contrast, in a case where the vertical distance between a concavity and a convex is large as illustrated in Fig. 10 (e.g., in a case where the vertical distance between adjacent convexes is 1 mm and the vertical distance between a concavity and a convex is not less than 0.2 mm), a difference among amounts of light emitted on the emission surface side of the light guide 21 is significantly small, as compared to the case of Fig. 9. It follows that no luminance unevenness occurs on the emission surface side of the light guide 21 even in the case where the diffusing plate 15 is provided so as to be away from the light guide 21.

In addition, in a case where the vertical distance between adjacent convexes of the light guide 21 is excessively large, luminance unevenness occurs, at intervals equal to the distance between adjacent convexes, on the emission surface side of the light guide 21 due to the provision of the concavities and convexes. Note, however, that it is possible to prevent such luminance unevenness with use of a diffusing plate and/or an optical sheet group such as a prism sheet, in a case where the distance between adjacent convexes is about 1 mm. Thus, the distance between adjacent convexes preferably falls within a range from 0.6 mm to 1.0 mm. In this case, even if luminance unevenness occurs on the emission surface side of the light guide 21, it is possible to diffuse the luminance unevenness. In contrast, in a case where the distance between adjacent convexes exceeds 1 mm, it becomes impossible to fully diffuse the luminance unevenness, which occurs on the emission surface side of the light guide 21, even with use of a diffusing plate. Further, it becomes difficult to provide concavities and convexes in a case where the distance between adjacent convexes is excessively small.

According to the present embodiment, the concavities and convexes of a light guide 21 have a cross section whose shape is wavelike (i.e., in a form of a chain of arcs) which cross section is taken in the direction perpendicular to the long-side direction of the light guide 21. The concavities and convexes are, however, not particularly limited to the cross-sectional shape, and therefore can have any shape, provided that there exists, in the cross-sectional shape, a surface which has a slope with respect to the surface on which the scatterers are provided. The cross-sectional shape can, for example, be a saw-toothed shape (i.e., a chain of triangular concavities and convexes). It is possible to reduce the amount of light emitted from side surfaces of a light guide 21, and it is therefore possible to prevent luminance unevenness, regardless of the shape of the concavities and convexes.

Further, the present embodiment deals with the case where a distance between adjacent convexes is constant over the entire emission surface of a light guide 21, but such a distance is not limited to this. Note, however, that, in the case where a distance between adjacent convexes is constant, a light emission efficiency becomes substantially uniform over the entire emission surface, due to the provision of the concavities and convexes. This allows the optical path changing section to be easily designed.

A method for forming the concavities and convexes of a light guide 21 is not limited to a specific one. The concavities and convexes can be formed by, for example, extrusion molding or injection molding. In particular, in a case of employing extrusion molding, the concavities and convexes on the emission surface can be formed during production of the light guide 21. As a result, it is possible to easily produce the light guide 21.

The width of a light guide 21 in the short-side direction is not limited to a specific one. The width, however, more preferably falls within a range from 30 mm to 100 mm. With the arrangement, it is possible to (i) prevent luminance unevenness by reducing the amount of light emitted from side surfaces of the light guide 21 and (ii) maintain a strength (rigidity) of the light guide 21.

As described above, according to the light source module 10 of the present embodiment, concavities and convexes are provided on an emission surface 21 d of a light guide 21 in the long-side direction of the light guide 21. Further, scatterers 23, each serving as an optical path changing section for causing light guided inside the light guide 21 to be emitted from the emission surface 21 d, are provided on a surface (under surface) of the light guide 21 which surface is opposite to the emission surface 21d. More specifically, according to the light source module 10, the light guide 21 includes concavities and convexes on the light emission surface 21d, and respective ridge lines of the convexes extend substantially parallel to the long-side direction of the light guide 21. With the arrangement, light scattered by the scatterers 23 is more likely emitted from the emission surface 21d by the concavities and convexes before reaching the side surfaces of the light guide 21. As a result, the amount of light emitted from the side surfaces of the light guide 21 is significantly decreased, and luminance unevenness can thus be prevented. As such, it is possible to provide a light source module 10 in which the rate of occurrence of luminance unevenness can be reduced even in the case where the light guide 21 is not less than 30 mm in width in the short-side direction.

As described above, the light source module of the present invention is arranged such that (i) concavities and convexes are provided on the light emission surface of a light guide and (ii) respective ridge lines of the convexes extend substantially parallel to the long-side direction. The electronic device of the present invention includes the light source module as described above.

As such, the present invention has (i) the effect of providing a light source module in which a rate of occurrence of luminance unevenness can be reduced and (ii) the effect of providing an electronic device including the light source module.

The light source module of the present invention may preferably be arranged such that a ratio of (i) a vertical distance between a concavity and a convex to (ii) a distance between adjacent convexes is not less than 0.2, and more preferably 0.3.

Since according to the above arrangement, the ratio of (i) the vertical distance between a concavity and a convex to (ii) the distance between adjacent convexes is not less than 0.2, it is possible to control the amount of light, emitted from the side surfaces of the light guide, to become about 1.3 times as large as the amount of light emitted from the emission surface. Therefore, it is possible to prevent luminance unevenness from occurring in a case where the light guide is provided so as to be away from a diffusing plate. Furthermore, in the case where the second ratio is not less than 0.3, it is possible to further reduce the amount of light emitted from the side surfaces of the light guide. This can be easily realized by designing a pattern of the scatterers. As a result, it is possible to more reliably reduce a rate of occurrence of luminance unevenness. In addition, it is also possible to reduce luminance unevenness occurring on the emission surface side due to the provision of the concavities and convexes.

The light source module of the present invention may preferably be arranged such that the distance between adjacent convexes falls within a range from 0.6 mm to 1.0 mm.

Since according to the above arrangement, the distance between adjacent convexes falls within the range from 0.6 mm to 1.0 mm, it is possible to reduce luminance unevenness occurring on the emission surface side due to the provision of the concavities and convexes.

The light source module of the present invention may preferably be arranged such that the distance between adjacent convexes is constant over entire the light emission surface of the each of the plurality of light guides.

Since according to the above arrangement, the concavities and convexes have a constant (uniform) distance between adjacent convexes over the entire light emission surface of the light guide, it is possible to substantially uniformize a property of light emission from the emission surface entirely over the emission surface. As such, it is possible to easily design the optical path changing section.

In order to solve the above problem, an electronic device of the present invention includes any one of the above light source modules.

According to the above arrangement, it is possible to provide an electronic device including a light source module in which the rate of occurrence of luminance unevenness can be reduced.

The present invention is not limited to the description of the embodiment above, but may be altered in various ways by a skilled person within the scope of the claims. Any embodiment based on a combination of technical means properly altered within the scope of the claims is also encompassed in the technical scope of the present invention.

### Industrial Applicability

The present invention relates to (i) a light source module including a side-edge type (also referred to as a side-light type) light guide plate, which causes surface emission of light from a light source, and (ii) an electronic device including the light source module. The present invention is applicable to, for example, (i) a light source module such as a backlight and (ii) an electronic device such as a liquid crystal display device.

### Reference Signs List

- 1: liquid crystal display device (electronic device)
- 10: light source module
- 12: LED (light source)
- 21: light guide
- 21a: end surface
- 21d: emission surface
- 22: gap
- 23: scatterer (optical path changing section)

## Claims

1. er (optical path changing section) A light source module, comprising:
a plurality of light guides provided so as to be juxtaposed in a long-side direction of the plurality of light guides, and so that a gap is secured between any adjacent ones of the plurality of light guides;
a plurality of light sources which cause light to enter a corresponding one of the plurality of light guides via at least one end surface located in the long-side direction; and
a plurality of optical path changing sections, provided on a surface of each of the plurality of light guides which surface is opposite to a light emission surface of the each of the plurality of light guides, for causing light guided inside the each of the plurality of light guides to be emitted from the light emission surface,
the each of the plurality of light guides having a surface of concavities and convexes which surface serves as the light emission surface, and
respective ridge lines of the convexes extending substantially parallel to the long-side direction.

2. tially parallel to the long-side direction. The light source module according to claim 1, wherein a ratio of (i) a vertical distance between a concavity and a convex to (ii) a distance between adjacent convexes is not less than 0.2.

3. a distance between adjacent convexes is not less than The light source module according to claim 2, wherein the distance between adjacent convexes falls within a range from 0.6 mm to 1.0 mm.

4. 6 mm to 1.0 mm. The light source module according to any one of claims 1 to 3, wherein the distance between adjacent convexes is constant over the entire light emission surface of the each of the plurality of light guides.

5. rality of light guides. An electronic device, comprising a light source module recited in any one of claims 1 to 4.
